(19) Europäisches Patentamt
European Patent Office
Office européen des brevets

(11) **EP 4 742 098 A1**

(12) **EUROPEAN PATENT APPLICATION**

(43) Date of publication:
**13.05.2026  Bulletin 2026/20**

(21) Application number: **24211569.9**

(22) Date of filing: **07.11.2024**

(51) International Patent Classification (IPC):
**G06N 3/045** (2023.01)        **G06N 3/0895** (2023.01)
**G06N 3/096** (2023.01)

(52) Cooperative Patent Classification (CPC):
**G06N 3/045; G06N 3/0895; G06N 3/096**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Helsing GmbH**
**81671 Munich (DE)**

(72) Inventors:
- **MAFLA DELGADO, Andrés**
  **81671 Munich (DE)**
- **BITEN, Ali Furkan**
  **81671 Munich (DE)**
- **KOUSKOURIDAS, Rigas**
  **81671 Munich (DE)**

(74) Representative: **Rummler, Felix et al**
**Maucher Jenkins**
**Liebigstraße 39**
**80538 München (DE)**

(54) **METHODS, SYSTEMS, AND COMPUTER PROGRAM PRODUCTS FOR DETERMINING MACHINE LEARNING MODELS FOR COMPUTER VISION**

(57)    A computer-implemented method of determining a machine learning model, the method comprising: providing a first training dataset; pre-training a first machine learning model on the first training dataset by self-supervised learning, SSL, wherein the pre-training by SSL comprises determining, in particular minimizing, a first loss function; and training the pre-trained first machine learning model on the first training dataset by knowledge distillation to generate at least one first representation of a data point comprised in the first training dataset, wherein the training by knowledge distillation comprises: determining, in particular minimizing, the first loss function and a second loss function indicative of a similarity of the first representation and a second representation generated by a second machine learning model.

**Fig. 1**

EP 4 742 098 A1

## Description

## Technical Field

The present disclosure relates to systems, methods, and computer program products for determining machine learning models that are applicable for computer vision. The present disclosure is applicable in the field of processing sensor data, in particular processing image data.

## Background

An important task in computer vision is generating a representation of an image that captures its global and local features. Such a representation may be processed to perform further tasks, for example classifying images, recognizing an object on an image, or determining key points on an image. Such a task is solved more accurately if the representation captures more features of the image.

It is known to train machine learning algorithms by supervised learning to process images and to generate representations of the images. However, this approach requires labelled data, which typically requires manual labelling.

Another approach is self-supervised learning. However, representations obtained by self-supervised learning only capture a very limited part of the features of the image. Moreover, training efficiency is limited. In particular, a large number of training epochs are required to obtain a useful model, and even this requires a large training dataset.

There is a need for systems and methods that overcome these shortcomings.

## Summary

Disclosed and claimed herein are systems, methods, and devices for determining machine learning models for computer vision.

A first aspect of the present disclosure relates to a computer-implemented method of determining a machine learning model. The method comprises the following steps:

- providing a first training dataset;
- pre-training a first machine learning model on the first training dataset by self-supervised learning, SSL, wherein the pre-training by SSL comprises determining, in particular minimizing a first loss function; and
- training the pre-trained first machine learning model on the first training dataset by knowledge distillation to generate at least one first representation of a data point comprised in the first training dataset.

Herein, the training by knowledge distillation comprises determining, in particular minimizing, the first loss function and a second loss function indicative of a similarity of the first representation and a second representation generated by a second machine learning model. Determining the first and second loss function may be performed independently. Alternatively, or additionally, determining the first and second loss function may be performed simultaneously (e.g., in parallel), or subsequently.

Knowledge distillation may be defined as a process where a smaller, more efficient student model is trained to replicate the behaviour of a larger, more complex teacher model. This can result in a transfer of knowledge from the teacher model to the student model. In other words, knowledge-distillation may lead to alignment of the first representation (generated by the first machine learning model) with the second representation (generated by the second machine learning model). The above method has been shown to have the advantages that the performance of the first machine learning model is increased, and that training converges faster.

It is preferred to minimize both the first loss function and the second loss function at the same time, which may involve calculating both loss functions during each training step. This allows setting weights during training simultaneously such that both losses are reduced. In other words, the model is trained against two objective functions (representing the data points and alignment with the second machine learning model) simultaneously. The term "simultaneously" as used herein may mean "concurrently", "in parallel" or "successively (in close temporal relation)".

Thus, the training time and the required computational resources are reduced. To obtain these advantages, the second machine learning model is frozen, i.e. no training and/or adjustment of parameters are done during execution of the method.

Moreover, the method has been shown to reduce the reliance on large annotated datasets and is therefore particularly beneficial in scenarios where labelled data is scarce or expensive to obtain. The representations generated by the trained first machine learning model are more accurate and capture more details.

Any training step may train the first machine learning model to generate one or more representations. In particular, the pre-training may train the first machine learning model to generate one or more initial representations of a data point comprised in the first training dataset. Training by knowledge distillation may train the first machine learning model to refine the representations, which may conceptually be similar or identical to the initial representations but generally have different values as the first machine learning model is more aligned with the second machine learning model after training.

In an embodiment, training by knowledge distillation comprises the following steps:

- computing a combined loss function based on the first loss function and the second loss function; and
- training the pre-trained first machine learning model based on the combined loss function, in particular by minimizing the combined loss function.

It is more preferred that the combined loss function comprises an isotone function of the second loss function and the first loss function. In other words, the combined loss function may be defined such that it decreases if the second loss function and/or the first loss function decreases. In an example, the combined loss function may be a weighted sum of the second loss function and the first loss function. The combined loss function has the advantage that it ensures simultaneously training the first machine learning model to represent the images more accurately and to align with the second machine learning model. The combined loss function is preferably given as an analytical expression that can be comparably simply calculated and understood.

In another embodiment, the first loss function is based on a contrastive, self-distillation, and/or masking loss.

In yet another embodiment, the trained first machine learning model is applicable as a backbone for an image classifier, an object detector, and/or a key point matching network.

In particular, the method may be used to train the first machine learning model on a pretext task such that it is operable to generate a latent representation of an input image. The trained first machine learning model may be trained by application-specific training to classify images, detect objects, and/or detect key points by a further training step, such as supervised learning. An advantage of the above method is that the application-specific training converges faster than on an untrained machine learning model.

In a further embodiment, pre-training the first machine learning model comprises training using DINO. The method has been tested by using DINO to pre-train.

In another embodiment, the second machine learning model has been trained on a second training dataset different from the first training dataset. This is advantageous because the first training dataset may be specifically determined to fit to the specifics of the first machine learning model, and the second training dataset may be chosen to fit to specifics of the second machine learning model.

In yet another embodiment, the second training dataset has a larger cardinality than the first training dataset. This has the advantage that only the second machine learning model is trained in a rather computationally expensive way using a larger training dataset. The first machine learning model, however, is trained in a more computationally efficient way by using a smaller dataset, whereas knowledge contained in the larger training dataset is also transferred to the first machine learning module by knowledge distillation. This is more efficient because less training epochs are needed to obtain a trained first machine learning model that is adapted to correctly determine representations of a variety of data points at a quality similar to that, or better than, attained by training on the first training dataset. The first training dataset is preferably a subset of the second training dataset. This allows selecting suitable data points for the first machine learning model such that the required amount of training data is not too high.

In a further embodiment, the second machine learning model has been trained by DINOv2. DINOv2 can generate a representation that captures highly accurate and nuanced visual details. It is therefore suitable as a teacher network for DINO or other student networks. Therefore, training the student network using DINOv2 as the teacher allows obtaining faster convergence and better generalization.

In a further embodiment, the second loss function is based on a distance metric and/or a cosine similarity. The second loss function preferably minimizes the sum of distances.

In a further embodiment, the first and/or second machine learning model is applicable as a backbone for an image classifier, an object detector, and/or a key point matching network. In particular, the first machine learning model may be operable to generate a first representation, and/or the second machine learning model may be operable to generate a second representation, and any of these representations may be adapted for processing by a further algorithm, such as a further machine learning model, to determine key points on the input data points, classify the input data points, and/or determine objects on the input data points.

In a further embodiment, the first and/or second training dataset comprises image data. The data point may comprise an image.

In a further embodiment, the image data comprises at least one subset, wherein each subset comprises an initial image, a local portion of the initial image, and/or a global portion of the initial image.

Global portions allow capturing macro aspects of the image. Local portions capture micro aspects of the images. The subset preferably comprises more local portions than global portions. In a preferred example, the sizes of the global portions on the images of a dataset are chosen randomly between 40 % and 100 % of the area of the image. In this example, the area of each local portion is chosen randomly between 5 % and 15 % of the area of image. A global portion may have a scale size, such as an edge length, of 2-3 times larger than a local portion. For simplicity, local portions are preferably chosen such that they have an identical local portion size, and global portions are preferably chosen such that they have an identical global portion size.

The method was tested in an exemplary embodiment wherein the initial images were sized 256px x 256px, the global portions were at a fixed size of 224px x 224px, and the local portions were resized to a fixed size of 96px x 96 px. Locations of the portions were randomly selected. In the exemplary embodiment, each subset contained one initial image, 2 global portions, and 8 local portions.

Using both local and global portions allows enhancing the model's ability to understand and represent complex visual scenes comprehensively.

The first and/or second representation may comprise at least one feature vector.

The initial, first, and/or second representation may be indicative of a classification of data point, an object indicated by the data point and/or a key point indicative of a feature indicated by the data point.

The method is particularly advantageous if the first training dataset is much smaller than the second training dataset. For example, the second training dataset may be provided based on training the second machine learning model.

It has been shown that training by knowledge distillation is particularly suitable for accelerating convergence of the training of the first machine learning model if the first training dataset is pruned. This is particularly the case if DINOv2 is the second machine learning model.

A second aspect of the present disclosure relates to a system comprising one or more processors and one or more storage devices, wherein the system is configured to perform the computer-implemented method of the first and/or second aspect of the present disclosure.

A third aspect of the present disclosure relates to a computer program product for loading into a memory of the system. The computer program comprises instructions, that, when executed by a processor of the system, cause the system to execute a method of the first and/or second aspect of the present disclosure.

In an embodiment, a non-transitory computer-readable storage medium is provided that stores instructions executable by one or more processors. The instructions comprise any of the steps of a method of the first and/or second aspect of the present disclosure.

A fourth aspect of the present disclosure relates to a computer program product comprising a trained machine learning module obtainable by the method of the second aspect of the present disclosure. In an embodiment, a non-transitory computer-readable storage medium is provided that stores the trained machine learning module.

## Brief description of the drawings

The features, objects, and advantages of the present disclosure will become more apparent from the detailed description set forth below when taken in conjunction with the drawings in which like reference numerals refer to similar elements.

- Figure 1 shows a flow chart depicting a machine learning model training method;
- Figure 2 shows a block diagram depicting a machine learning model training system;
- Figure 3 shows a block diagram depicting another machine learning model training system; and
- Figure 4 shows a block diagram depicting data structures.

## Detailed description of the preferred embodiments

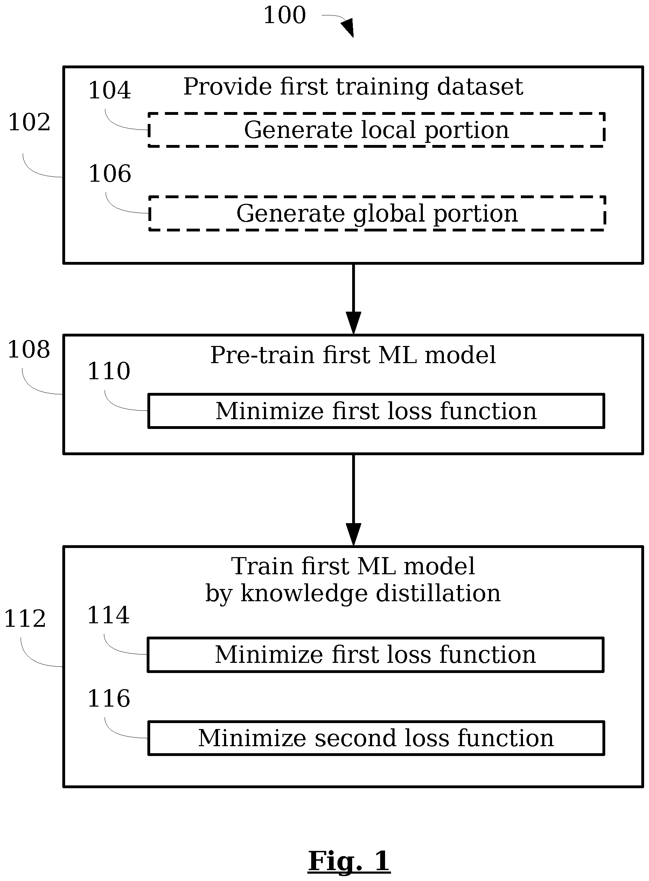

Figure 1 shows a flow chart depicting a computer-implemented method 100 of training a machine learning model.

Method 100 begins by providing, 102, a first training dataset. The first training dataset may be determined by collecting real-world or synthetic data points, such as images. An advantage of the method is that the first training dataset need not be very large for the first machine learning model to generate accurate and rich representations. Therefore, the first training dataset preferably includes real-world examples, even if only a limited number of such examples are available.

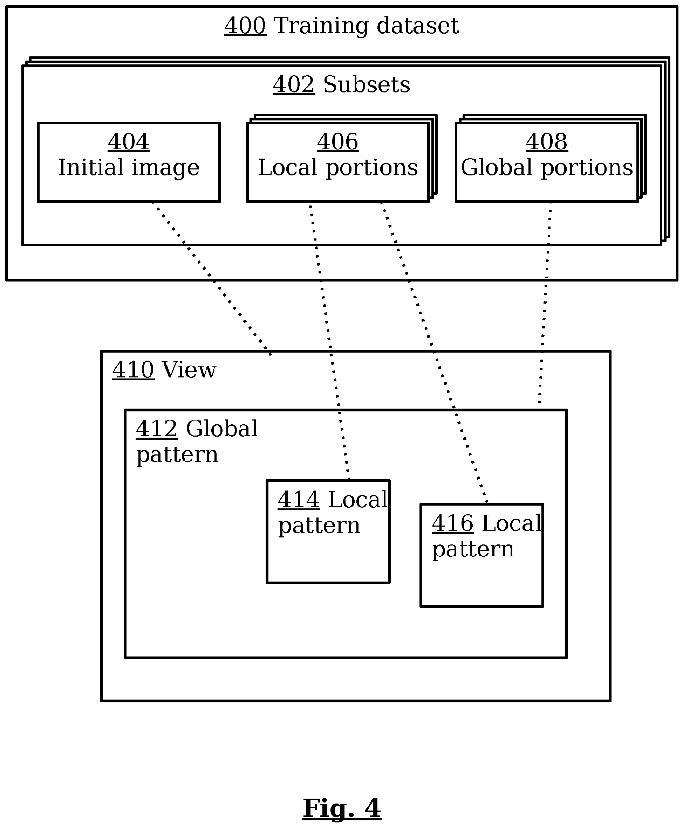

Providing the first training dataset may comprise including one or more initial images into the first training dataset. Providing the first training dataset may further comprise generating local portions 104 and/or global portions 106 and including them into the first training dataset. They are shown in Fig. 4 and further described in the corresponding description.

In step 108, a first machine learning model is pre-trained on the first training dataset. Pre-training includes determining, in particular minimizing, 110, a first loss function. Pre-training the first machine learning model has the effect that it is capable of generating representations that capture some information contained in the first training dataset. It is preferred to train the first machine learning model until a first abort condition is reached.

After completion of the pre-training, the first machine learning model is further trained, 112, by knowledge distillation. This includes simultaneously minimizing the first loss function 114 and the second loss function 116. This preferably includes training the first machine learning model over a plurality of training epochs. A training epoch may be understood as a period over which the first training dataset is processed. During one epoch, weights of the first machine learning model may be adjusted to be further refined before the training dataset is adjusted again in a further training epoch. Within one epoch, the adjustment of the weights is executed based both on the first loss function and the second loss function. This may be done by calculating a combined loss function including first and second loss functions, or by adjusting the weights based on the first loss function, and then adjusting the weights again based on the second loss function, but still during the same step. Such adjustment is simultaneously based on both first and second loss function because the adjustment steps occur during the same training step (i.e. iteration).

The first machine learning model is preferably applicable as an image classifier, for example as a backbone of an image classifier. For example, the representation may be indicative of a class the image belongs to, locations of one or more key points on the image, or objects shown on the image. The representation may, however, not comprise any straightforward indication of classifications or locations but a latent representation that may be processed by a further neural network. In this sense, the first machine learning model may be usable as a head of an image detection pipeline. The representation is preferably a multidimensional feature vector. The same holds mutatis mutandis for the second machine learning model.

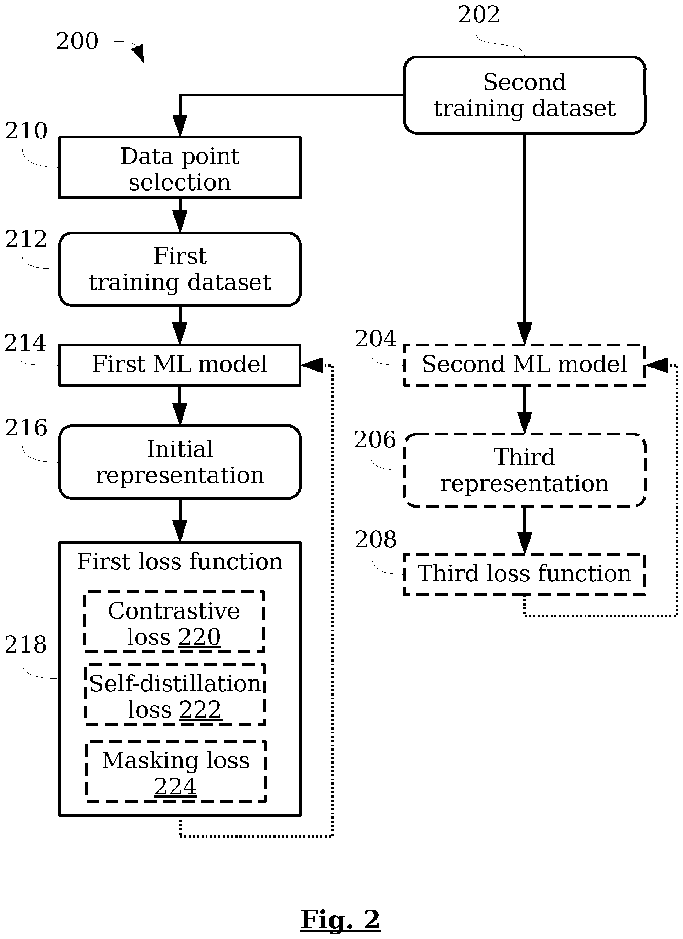

Figure 2 shows a block diagram depicting a system 200 of training a first machine learning model 214 and, preferably, training a second machine learning model, 204.

The system 200 comprises a first training dataset 212 and a second training dataset 202. In this example, the first training dataset is a subset of the second training dataset 202. The second training dataset 202 may be determined by collecting real-world or synthetic data points. The data points may comprise images, but this is not necessarily the case. The system comprises a data point selection algorithm 210 that receives the second training dataset 202 and determines data points of the second training dataset 202 to be included into first training dataset 212. The data point selection algorithm 210 may comprise a train/test split algorithm.

The first machine learning model 214 is trained, in a pre-training step, on the first training dataset 212. The first machine learning model 214 may comprise a model suitable for self-supervised learning. The method has been tested by using DINO (Caron et al.: Emerging Properties in Self-Supervised Vision Transformers. arXiv:2104.14294v2 [cs.CV]) to pre-train, and each of the following models as the first machine learning model 214:

- ResNet-18, ResNet-50 (He et al.: Deep Residual Learning for Image Recognition. arXiv:1512.03385 [cs.CV] (2015)),
- Yolov8, Yolov5 (Redmon et al.: You Only Look Once: Unified, Real-Time Object Detection. arXiv: 1506.02640 [cs.CV] (2015)),
- ViT (Dosovitskiy et al.: An Image is Worth 16x16 Words: Transformers for Image Recognition at Scale. arXiv:2010.11929 [cs.CV] (2020)),
- Yolo-NAS (Aharon, Shay et al.: Super-Gradients. DOI: 10.5281/ZENODO.7789328. GitHub repository (2021)), and
- VGG (Simonyan and Zisserman: Very Deep Convolutional Networks for Large-Scale Image Recognition. arXiv:1409.1556 [cs.CV] (2014)).

However, also any other methods of self-supervised learning may be used instead of DINO, in particular Barlow Twins (Zbontar et al.: Barlow Twins: Self-Supervised Learning via Redundancy Reduction. arXiv:2103.03230v3 [cs.CV]) and/or VICRegL (Bardes et al.: VICRegL: Self-Supervised Learning of Local Visual Features. arXiv:2210.0157v1 [cs.CV]).

Training a first machine learning model in this pre-training step leads to generation of initial representations 216 of the data points of the first training dataset. Any representation described herein may comprise at least one feature vector.

The representations are used to calculate a first loss by a first loss 218, which may comprise a contrastive loss 220, a self-distillation loss 222, and/or a masking loss 224. The loss is used to set weights in the first machine learning model 214.

The second machine learning model 204 may be trained, preferably by DINOv2 (Oquab et al.: DINOv2: Learning Robust Visual Features without Supervision. arXiv:2304.07193v2 [cs.CV] (2024)), on the second training dataset 202 to generate a third representation 206, using a third loss function 208. The second machine learning model 204 thereby acts as a feature extractor and may be much larger model that requires more compute resources than the first machine learning model 214. This may also be done as part of a different process.

It is preferred to train both the first machine learning model 214 and the second machine learning model 204 by self-supervised learning. This is advantageous in cases where labeled data is difficult to obtain.

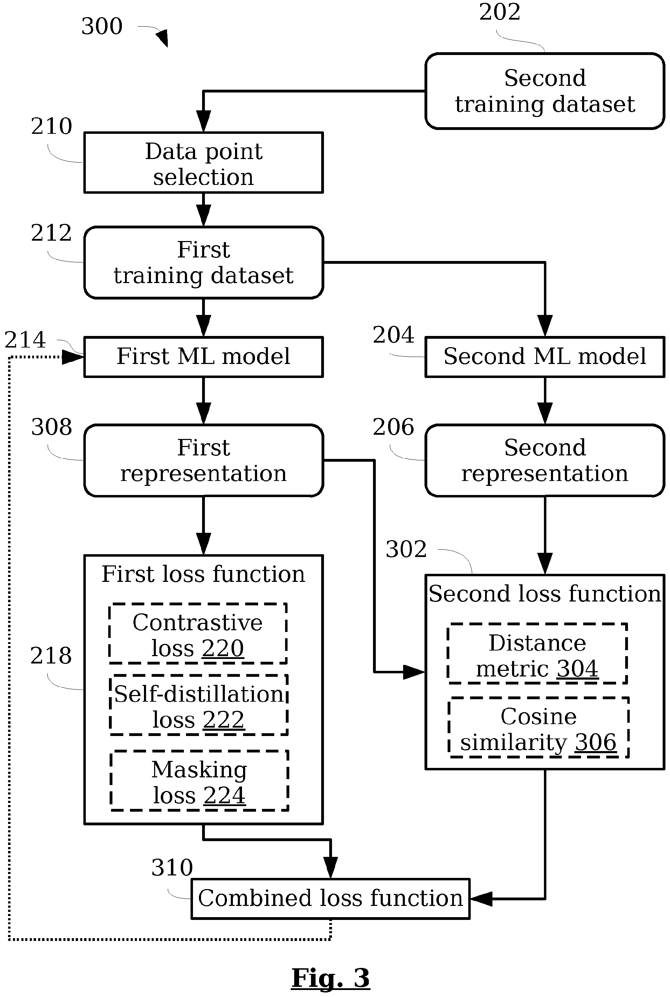

Figure 3 shows a block diagram depicting another machine learning model training system 300.

The system 300 is suitable for knowledge distillation and may execute step 112 (knowledge distillation) of method 100 (Fig. 1). In order to generate a suitable training dataset, it comprises the second training dataset 202, the data point selection algorithm 210, and the first training dataset 212 generated by the data point selection algorithm 210. In this embodiment, these components are the same as those described with respect to Fig. 2, so that the first training dataset 212 is supplied to inputs of the first and second machine learning models. However, other training datasets may be used.

The first machine learning model 214 has preferably been pre-trained as shown in Fig. 2. The second machine learning model 204 has preferably been pre-trained as shown in the optional part of Fig. 2. Here, the first machine learning model 214 is preferably a smaller, more efficient model compared to the second machine learning model 204 and may be referred to as the student model. The larger, more complex second machine learning model 204 may be referred to as the teacher model.

The training process shown here aims at changing weights in the first machine learning model 214 so that it generates a refined first representation 308 of entries of the first training dataset 212. The refined first representation 308 may conceptually be understood to be the same as the initial representations but it has in general different values. This is because as the first machine learning model 214 becomes more aligned with the second machine learning model 204 after training as detailed below. The refined first representation 308 is used to determine two losses. A first loss function 218 may be similar or identical to the first loss function during pre-training and include a contrastive loss 220, a self-distillation loss 222, and/or a masking loss 224.

In parallel, the second machine learning model 204, i.e. the teacher model, processes the same training dataset 212 as the first machine learning model 214 to generate a second representation 206. The second representation 308 is generally more accurate as it is produced by the teacher model. The aim is therefore training the first machine learning model 214 so that it generates a first representation 308 that comes close to the second representation 206 generated by the second machine learning model 204. To do so, a second loss function 302 is determined that is indicative of a similarity between representations 206 and 308. The second loss function 302 may comprise distance metric 304 and/or a cosine similarity 306. Applying the distance metric 304 may include calculating an inner angle, a distance, a distribution, or any other measure indicative of by how much the first representation 308 and the second representation 206 differ.

A cosine similarity C may be defined as

$$C(\boldsymbol{a}, \boldsymbol{b}) = \frac{\boldsymbol{a} \cdot \boldsymbol{b}}{\|\boldsymbol{a}\| \, \|\boldsymbol{b}\|}$$

A preferred second loss function 302 may be based on a cosine similarity and have the form

$$L = \sum_{i=1}^{N} \left( 1 - \frac{\boldsymbol{s}_i \cdot \boldsymbol{t}_i}{\|\boldsymbol{s}_i\| \, \|\boldsymbol{t}_i\|} \right)$$

Here, the summation index i represents the learned embedding or vector of each image or data point. Both loss functions are combined into a combined loss function 310 that is both indicative of the performance of the first machine learning model in generating meaningful representations of the first training dataset 212 at all, and of its performance at mimicking the output 206 of the second machine learning model 204. The combined loss function is then used to set weights of the first machine learning model 214.

This means that knowledge is transferred from the teacher model 204 to the student model 214. In other words, knowledge-distillation leads to alignment of the first representation (generated by the first machine learning model) with the second representation (generated by the second machine learning model). This has the advantage that the performance of the first machine learning model is increased, and training converges faster. Thus, the training time and the required computational resources are reduced.

This training scheme has the advantage that the first machine learning model 214 learns to generate representations that capture more accurate and nuanced visual details. Moreover, the training approach comprised pre-training as described with reference to Fig. 2 and knowledge distillation has been found to allow for a faster convergence and better generalization compared to self-supervised learning or knowledge distillation alone. In particular, the performance is improved and the overall training time is reduced. The method thus requires less computational resources. It particular, the method provides quick convergence if the second training dataset 202 is small. This makes the training scheme advantageous for cases where data are scarce or expensive to obtain.

The above training scheme is applicable to computer vision tasks. The trained first machine learning model 214 may be configured to process and classify images, to detect objects on images, and/or match key points on images.

Figure 4 shows a block diagram depicting data structures.

The training dataset 400 shown here may serve as an example for the first training dataset, the second training dataset, or both. The training dataset 400 comprises images and local and global portions thereof. One or more corresponding local portions 406 of an initial image 404 and/or corresponding global portions 408 of the same initial image 404 may be grouped together with the image initial 404 into a subset 402. An initial image may correspond to a view 410 on an object. A portion of an image may be understood to be a contiguous part of the image, preferably a rectangular part of the image. It is preferred to choose a fixed number and size of portions that is adapted to a size of an input of the first and/or second machine learning model.

The global portions 408 are generally large cutouts (or crops) of initial image 404. They are preferably indicative of global patterns 412 of view 410, i.e. capture macro-aspects of the images. In examples, the sizes of the global portions 408 on the images of a dataset are chosen randomly between 40 % and 100 % of the area of the image. This is sufficiently small to enrich the training dataset 400, and large enough to capture global patterns. The global portions are preferably determined by cutting out portions of the image, more preferably at random locations. In a tested embodiment, the initial images were sized 256px x 256px and the global portions 408 were at a fixed size of 224px x 224px.

The local portions 406 are generally small cutouts (or crops) of initial image 404. They are preferably indicative of local patterns 414, 416 on the view 410, i.e. capture micro-aspects of the images. Local portions 406 are sized randomly between 5 % and 15 % of the area of image in an example.. The local portions are preferably determined by cutting out portions of the image, more preferably at random locations. In a tested embodiment, the initial images were sized 256px x 256px and the local portions 406 were at a fixed size of 96px x 96 px.

Global portions 408 preferably have a scale size, such as an edge length, 2-3 times larger than local portions 406. The subset 402 preferably comprises a larger number of local portions 406 than of global portions 408. In an exemplary embodiment, each subset 402 contains one initial image 404, 2 global portions 408, and 8 local portions 406.

Combination of local and global portions allows enhancing the model's ability to understand and represent complex visual scenes comprehensively.

**Reference signs**

| | |
|---|---|
| 100 | Computer-implemented method |
| 102-116 | Steps of method 100 |
| 200 | System for self-supervised learning |
| 202 | Second training dataset |
| 204 | Second machine learning model |
| 206 | Third representation |
| 208 | Third loss function |
| 210 | Data point selection |
| 212 | First training dataset |
| 214 | First machine learning model |
| 216 | Initial representation |
| 218 | First loss function |
| 220 | Contrastive loss |
| 222 | Self-distillation loss |
| 224 | Masking loss |
| 300 | System for knowledge distillation |
| 302 | Second loss function |
| 304 | Distance metric |
| 306 | Cosine similarity |
| 308 | First representation |
| 310 | Combined loss function |
| 400 | Training dataset |
| 402 | Subsets |
| 404 | Initial image |
| 406 | Local portion |
| 408 | Global portion |
| 410 | View |
| 412 | Global pattern |
| 414, 416 | Local patterns |

**Claims**

1. A computer-implemented method of determining a machine learning model, the method comprising:

   providing a first training dataset (212, 400);
   pre-training a first machine learning model (214) on the first training dataset (212, 400) by self-supervised learning, SSL,
   wherein the pre-training by SSL comprises determining, in particular minimizing, a first loss function (218); and
   training the pre-trained first machine learning model on the first training dataset (212, 400) by knowledge distillation to generate at least one first representation (308) of a data point comprised in the first training dataset (212, 400), wherein the training by knowledge distillation comprises:
   determining, in particular minimizing, the first loss function (218) and a second loss function (302) indicative of a similarity of the first representation (308) and a second representation generated by a second machine learning model (204).

2. The method of claim 1, wherein training by knowledge distillation comprises:

   computing a combined loss function (310) based on the first loss function (218) and the second loss function (302); and
   training the pre-trained first machine learning model based on the combined loss function (310), in particular by minimizing the combined loss function (310).

3. The method of any of the preceding claims, wherein the first loss function (218) is based on a contrastive loss (220), self-distillation loss (222), and/or masking loss (224).

4. The method of any of the preceding claims, wherein the trained first machine learning model (214) is applicable for computer vision, in particular as a backbone for an image classifier, an object detector, and/or a key point matching network.

5. The method of any of the preceding claims, wherein pre-training the first machine learning model (214) comprises training using DINO.

6. The method of any of the preceding claims, wherein the second machine learning model (204) has been trained on a second training dataset (202, 400) different from the first training dataset (212, 400).

7. The method of claim 6, wherein the second training dataset (202, 400) has a larger cardinality than the first training dataset (212, 400), and wherein the first training dataset (212, 400) is preferably a subset of the second training dataset (202, 400).

8. The method of any of the preceding claims, wherein the second machine learning model (204) has been trained by DINOv2.

9. The method of any of the preceding claims, wherein the second loss function (302) is based on a distance metric (304) and/or a cosine similarity (306).

10. The method of any of the preceding claims, wherein the first and/or second machine learning model (204) is applicable as a backbone for an image classifier, an object detector, a key point matching network.

11. The method of any of the preceding claims, wherein the first training dataset (212, 400) and/or second training dataset (202, 400) comprises image data and/or wherein the data point comprises an image.

12. The method of claim 11, wherein the image data comprises at least one subset, wherein each subset comprises an initial image (404), a local portion (406) of the initial image (404), and/or a global portion (408) of the initial image (404).

13. A system comprising one or more processors and one or more storage devices, wherein the system is configured to perform the computer-implemented method of any one of claims 1-12.

14. A computer program product for loading into a memory of a computer, comprising instructions, that, when executed by a processor of the computer, cause the computer to execute a computer-implemented method of any of claims 1-12.

15. A computer program product comprising a trained machine learning module obtainable by the computer-implemented method of any of claims 1-12.

100

**Fig. 1**

**Fig. 2**

**Fig. 3**

**400** Training dataset

**402** Subsets

**404**
Initial image

**406**
Local portions

**408**
Global portions

**410** View

**412** Global
pattern

**414** Local
pattern

**416** Local
pattern

**Fig. 4**

| | Europäisches Patentamt European Patent Office Office européen des brevets | **EUROPEAN SEARCH REPORT** | **Application Number** EP 24 21 1569 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SU LINZHI ET AL: "Point-MSD: Jointly Mamba Self-Supervised Self-Distilling Point Cloud Representation Learning", 2024 IEEE 17TH INTERNATIONAL CONFERENCE ON SIGNAL PROCESSING (ICSP), IEEE, 28 October 2024 (2024-10-28), pages 310-316, XP034817539, DOI: 10.1109/ICSP62129.2024.10846527 [retrieved on 2025-01-23] * abstract * * page 310 - page 315 * | 1-15 | INV. G06N3/045 G06N3/0895 G06N3/096 |
| A | JANG JIHO ET AL: "Self-Distilled Self-supervised Representation Learning", 2023 IEEE/CVF WINTER CONFERENCE ON APPLICATIONS OF COMPUTER VISION (WACV), [Online] 24 November 2022 (2022-11-24), pages 2828-2838, XP093263524, DOI: 10.1109/WACV56688.2023.00285 ISBN: 978-1-6654-9346-8 Retrieved from the Internet: URL:https://arxiv.org/pdf/2111.12958> [retrieved on 2025-03-25] * the whole document * | 1-15 | |
| A | LEBAILLY TIM ET AL: "Adaptive Similarity Bootstrapping for Self-Distillation based Representation Learning", 2023 IEEE/CVF INTERNATIONAL CONFERENCE ON COMPUTER VISION (ICCV), IEEE, 1 October 2023 (2023-10-01), pages 16459-16468, XP034515693, DOI: 10.1109/ICCV51070.2023.01513 [retrieved on 2024-01-15] * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 26 March 2025 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 24 21 1569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN WEI-CHI ET AL: "SSSD: Self-Supervised Self Distillation", 2023 IEEE/CVF WINTER CONFERENCE ON APPLICATIONS OF COMPUTER VISION (WACV), IEEE, 2 January 2023 (2023-01-02), pages 2769-2776, XP034290725, DOI: 10.1109/WACV56688.2023.00279 [retrieved on 2023-02-06] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 26 March 2025 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HE et al.** Deep Residual Learning for Image Recognition. *arXiv:1512.03385*, 2015
- **REDMON et al.** You Only Look Once: Unified, Real-Time Object Detection. *arXiv: 1506.02640*, 2015
- **DOSOVITSKIY et al.** An Image is Worth 16x16 Words: Transformers for Image Recognition at Scale. *arXiv:2010.11929*, 2020
- **HARON, SHAY et al.** *Super-Gradients*, 2021
- **SIMONYAN ; ZISSERMAN**. Very Deep Convolutional Networks for Large-Scale Image Recognition. *arXiv:1409.1556*, 2014
- **ZBONTAR et al.** Barlow Twins: Self-Supervised Learning via Redundancy Reduction. *arXiv:2103.03230v3*
- **BARDES et al.** VICRegL: Self-Supervised Learning of Local Visual Features. *arXiv:2210.0157v1*
- **OQUAB et al.** DINOv2: Learning Robust Visual Features without Supervision. *arXiv:2304.07193v2*, 2024